(19) Europäisches Patentamt
European Patent Office
Office européen des brevets

(11) Numéro de publication: **0 231 678 B1**

# (12) FASCICULE DE BREVET EUROPEEN

(45) Date de publication de fascicule du brevet: **02.05.91**

(51) Int. Cl.[5]: **C08F 291/00**, D06M 14/00

(21) Numéro de dépôt: **86402631.5**

(22) Date de dépôt: **27.11.86**

## (54) Procédé de greffage utilisant un agent inhibiteur d'homopolymérisation pour réaction radicalaire de greffage.

(30) Priorité: **28.11.85 FR 8517612**

(43) Date de publication de la demande: **12.08.87 Bulletin 87/33**

(45) Mention de la délivrance du brevet: **02.05.91 Bulletin 91/18**

(84) Etats contractants désignés: **BE CH DE ES FR GB IT LI NL**

(56) Documents cités:
**GB-A- 853 971**
**US-A- 3 488 268**
**US-A- 3 565 780**

(73) Titulaire: **INSTITUT TEXTILE DE FRANCE**
**35, rue des Abondances, B.P. 79**
**F-92105 Boulogne-Billancourt Cédex(FR)**

(72) Inventeur: **Chatelin, Roger**
**36, Allée des Monts d'Or**
**F-69380 Lisseux/Lozanne(FR)**
Inventeur: **Gavet, Louis**
**110, Rue Edmond Locard**
**F-69005 Lyon(FR)**

(74) Mandataire: **Gillard, Marie-Louise et al**
**Cabinet Beau de Loménie 55, Rue d'Amsterdam**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 231 678 B1

Rank Xerox (UK) Business Services

## Description

La présente invention concerne un agent inhibiteur d'homopolymérisation spécialement adapté pour être mis en oeuvre dans les réactions de greffage de substances monomères sur un matériau polymérique activé.

Une technique de greffage, bien connue, consiste à activer le matériau polymérique à greffer puis à mettre ledit matériau activé en contact avec le monomère, par exemple en solution, dans des conditions de température et de durée bien précises. L'activation a pour effet de créer des espèces radicalaires sur le matériau, à partir desquelles se développe la réaction de polymérisation du monomère.

Une difficulté rencontrée à l'occasion d'une réaction de greffage réside dans l'homopolymérisation, c'est-à-dire la polymérisation du monomère sur lui-même à partir d'espèces radicalaires présentes dans le milieu contenant le monomère. Ce phénomène est usuel, et la solution consiste à éliminer l'homopolymère formé par lavage du matériau greffé. Néanmoins cette solution n'est pas totalement satisfaisante dans la mesure où il y a sur-consommation de monomère par rapport au taux réel de greffage et où cela nécessite une ou plusieurs opérations supplémentaires.

Pour limiter cette homopolymérisation parasite, on a pensé mettre en oeuvre des agents inhibiteurs, connus pour empêcher le développement de réactions de polymérisation, comme l'hydroquinone, l'éther méthylique de l'hydroquinone ou le tertiobutylpyrocatéchol. Ces agents inhibiteurs sont utilisés lors du stockage des monomères purs; ils captent les espèces radicalaires présentes dans le milieu de telle sorte que le monomère ne se polymérise pas sur lui-même. Cependant dans le cas d'une réaction de greffage comme décrite ci-dessus, ces agents inhibent également les sites radicalaires nécessaires au greffage et portés soit par le matériau polymérique lui-même après activation, soit par la chaîne greffée en cours de croissance. Ainsi l'action de ces agents inhibiteurs est telle qu'ils bloquent la naissance ou la propagation de la réaction de greffage.

On a tenté de pallier cet inconvénient, dans le document GB.A.853971, en sélectionnant parmi les agents inhibiteurs traditionnels un agent qui agit sélectivement sur le monomère de greffage comparativement au polymère à greffer tel qu'un composé phénolique polyhydrique. Cet agent inhibiteur comporte une fonction compatibilisante vis-à-vis du milieu de greffage, ayant une polarité qui le rend soluble dans la phase monomère; de plus il se disperse plus facilement par diffusion dans la phase monomère que dans la phase polymère.

Or on a trouvé, et c'est ce qui fait l'objet de l'invention, un procédé de greffage dans lequel l'homopolymérisation est limitée. Ce procédé de greffage est du type connu dans lequel un matériau polymérique est mis en contact avec un milieu de greffage consistant en une solution ou une émulsion contenant au moins un monomère et un agent inhibiteur d'homopolymérisation comprenant une fonction compatibilisante vis-à-vis du milieu de greffage.

Selon l'invention l'agent inhibiteur est un composé comportant une fonction insaturée du type allylique et intervenant dans une proportion de 0,1 à 2% en poids par rapport au milieu de greffage.

Il était connu, par exemple par le document US.A.3,565,789, de faire intervenir dans une réaction de greffage des composés comportant une fonction insaturée du type allylique; mais dans ce cas ces composés sont des monomères qui participent a la réaction de greffage proprement dite.

Dans le procédé de l'invention et de façon inattendue, ces composés possèdent une action inhibitrice vis-à-vis de la formation d'homopolymères dans la réaction radicalaire de greffage, lorsqu' ils sont mis en oeuvre en faible proportion dans un milieu de greffage contenant au moins un autre monomère. En particulier on a retenu parmi les fonctions du type allylique le groupement méthyl-2-propène.

Par fonction compatibilisante on entend une fonction qui rend l'agent compatible avec le milieu de greffage. C'est en fait une fonction solubilisante lorsque la réaction de greffage se passe à partir d'une solution, en phase homogène, par exemple la fonction compatibilisante peut être une fonction sulfonique ou carboxylique quand le milieu de greffage est une solution aqueuse, ou une fonction phénolique quand le milieu de greffage est une solution benzénique. C'est une fonction émulsionnante lorsque la réaction de greffage se passe à partir d'une émulsion; on peut dans ce cas utiliser les mêmes fonctions que ci-dessus mais avec une efficacité moindre.

Parmi les agents inhibiteurs selon l'invention, on a retenu en particulier le méthyl-2 propène-2 sulfonate de sodium encore dénommé méthallyl sulfonate de sodium (MTAS), le (méthyl-2 propen-2-yl)-4-benzène sulfonate de sodium, le tertiobutyl-4-benzène allyl éther ou l'acétate d'allyle.

L'invention sera mieux comprise grâce à la description qui va suivre de différents exemples de greffage.

Deux types d'activation ont été mis en oeuvre dans les exemples décrits. Le premier est basé sur l'action de l'ozone sur le matériau polymérique à greffer, le second sur l'action d'électrons accélérés. Ces deux types d'activation, comme les autres techniques possibles, créent des espèces radicalaires actives sur le matériau polymérique à greffer,

notamment des radicaux provenant de la décomposition d'un hydroperoxyde thermolabile, par exemple un radical RO. qui déclenchera la polymérisation de greffage, mais aussi un radical .OH, qui libéré dans le milieu de greffage, peut déclencher la polymérisation du monomère sur lui-même et donc l'homopolymérisation.

Différents matériaux polymériques ont été greffés: du coton qui est un matériau cellulosique, du polyamide, du polypropylène.

Différents monomères ont été utilisés pour le greffage: l'acide acrylique, l'acrylamide, la N-vinylpyrrolidone, le styrène. Dans ce dernier cas le milieu de greffage était une émulsion.

Des essais comparatifs ont été réalisés avec, comme agent inhibiteur selon l'invention, le méthyl-2 propène-2 sulfonate de sodium (MTAS) dans différentes proportions, principalement 0,2 % en poids par rapport à la solution de greffage, le (méthyl-2 propen-2-yl)-4-benzène sulfonate de sodium, le tertiobutyl-4-benzène allyl éther ou l'acétate d'allyle. L'agent inhibiteur selon l'invention intervient généralement dans une proportion de 0,1 à 2 % en poids par rapport à la solution de greffage.

1° Série d'essais

Trois échantillons de polyamide, pesant chacun 10 grammes, sont soumis à un flux de 100 litres par heure d'un mélange ozone/oxygène, contenant 60 milligrammes d'ozone par litre. L'un des trois échantillons de polyamide ozoné est plongé dans une solution aqueuse contenant 10% d'acrylamide, rapport de bain 1/20, ne contenant pas de méthyl-2 propène-2 sulfonate de sodium (MTAS), à une température de 100° C pendant une heure et demie. Après rinçage pendant une demi-heure dans l'eau à 40° C, l'échantillon pèse 16,8 grammes, puis, après extraction à l'eau en soxhlet pendant huit heures, il pèse 14,5 grammes.

Le taux de greffage est défini selon la relation suivante :

$$Tg = \frac{Pg - Po}{Pg} \times 100,$$

Po étant la masse initiale de l'échantillon, et Pg la masse de l'échantillon après greffage et élimination des homopolymères.

Dans l'exemple précité, sans agent inhibiteur selon l'invention, Tg est égal à 31 % , mais lors du greffage une grande partie de l'acrylamide a formé de l'homopolymère qui a été éliminé notamment lors de l'extraction au soxhlet . Il est à noter également que la solution aqueuse d'acrylamide s'est progressivement transformée en un gel au cours de greffage, et n'est donc plus réutilisable.

Le deuxième échantillon a subi le même traitement que le premier, exception faite que la solution d'acrylamide contenait 0,1 % de méthyl-2 propène-2 sulfonate de sodium (MTAS). Après le premier rinçage, il pèse 11,8 grammes et après extraction en soxhlet 11,7 grammes. Tg est de 14,5 % , donc moins important que dans le premier échantillon mais il y a eu très peu d'homopolymère et la solution d'acrylamide, après greffage, est restée fluide et est donc réutilisable.

Le troisième échantillon , avec une concentration de 0,2 % de MTAS, a donné les mêmes résultats avec un Tg légèrement supérieur , 15,2 %.

2° série d'essais

On a greffé un tissu de polyamide, ozoné dans les mêmes conditions que ci-dessus , en le plongeant dans une solution aqueuse contenant 5 % d'acide acrylique, rapport de bain 1/10, ne contenant pas de MTAS, à une température de 90° C pendant deux heures. La masse initiale de l'échantillon (Po) était de 14,245 grammes ; après un rinçage à l'eau, elle était de 16,720 grammes soit une consommation de 2,475 grammes d'acide acrylique ; après 8 heures d'extraction en eau bouillante, elle était de 15,300 grammes ; puis,après 15 heures d'extraction au méthanol, elle était de 15,100 grammes. On a donc extrait 1,620 grammes d'acide acrylique sous forme d'homopolymère en comparaison du 0,855 gramme d'acide acrylique qui a effectivement été greffé sur le polyamide pour un taux de greffage Tg de 5,7 %.

Le même essai a été conduit avec une solution de greffage contenant 0,2 % de MTAS. Le Tg est légèrement inférieur à 5,1 %, mais la masse de tissu est restée constante après les trois rinçages et extractions. La présence de MTAS dans la solution de greffage a très peu limité le développement de la réaction de greffage, par contre elle a empêché l'homopolymérisation, ou tout au moins les homopolymères formés devaient être de petite taille pour être facilement éliminés au premier rinçage à l'eau.

3° série d'essais

On a greffé un tissu de coton, ozoné dans les mêmes conditions que dans les deux essais précédents, en le plongeant dans une solution aqueuse d'acide acrylique à 15 % , sans MTAS, à une température de 100° C pendant deux heures. On a procédé aux mêmes opérations de rinçage et extraction que pour la deuxième série d'essais. Le Tg est de 19 %, mais c'est seulement 1,403 gramme de monomère que est effectivement greffé sur 5,992 grammes de tissu en comparaison des 5,093 grammes de monomère retenu après le premier rinçage à l'eau. Les deux extractions suivantes ont permis d'éliminer l'excès d'homopolymère soit 3,69 grammes.

Le même essais a été conduit avec une solution de greffage contenant 0,2 % de MTAS. Le Tg est nettement inférieur à 6,6 %, mais la masse de tissu est restée constante après les trois rinçages et extractions. Il n'y a donc pas eu formation d'homopolymère gênant.

Cet exemple illustre très bien la surconsommation de monomère dans une réaction de greffage sans agent inhibiteur selon l'invention, de même que la nécessité de mettre en oeuvre des extractions poussées pour éliminer l'homopolymère formé. Enfin, la solution de greffage ne contenant pas de MTAS, après deux heures en étuve à 100°C est très visqueuse et difficilement réutilisable pour une opération de greffage subséquente.

## 4° série d'essais

On a greffé un tissu de polypropylène, ozoné dans les mêmes conditions que les essais précédents mais avec un flux gazeux à 30°C (au lieu de 25°C), en le plongeant dans une solution aqueuse d'acide acrylique à 15°C, rapport de bain 1/20, à une température de 100°C pendant deux heures. En l'absence de MTAS dans la solution de greffage, cette dernière a été prise en masse en raison de la polymérisation de l'acide acrylique sur lui-même. On n'a donc pas pu procéder aux mesures.

Avec 0,2 % de MTAS dans la solution de greffage, on a observé un Tg de 30,4 % et la masse de l'échantillon après rinçage à l'eau n'a pas varié lorsqu'on lui a fait subir un second rinçage pendant huit heures dans de l'eau bouillante.

Par ailleurs, la comparaison des quatre séries d'essais précitées illustre la faculté qu'a l'homme du métier d'adapter les conditions opératoires pour obtenir le taux de greffage souhaité.

## 5° série d'essais

On a soumis un échantillon de tissu de polypropylène à un traitement d'irradiation dans l'air par des électrons accélérés de 750 keV à une dose de 1 Mrad. Ce tissu a été stocké 3 semaines, puis on a effectué son greffage par une émulsion en styrène pendant 2 heures à 100°C , rapport de bain 1/5. L'émulsion en styrène était composée de 5 % de styrène, de 94 % d'eau et d'1 % d'un agent émulsionnant dénommé SOPROPHOR 3D33. La présence dans le milieu de greffage de 0,1 % de MTAS n'a pas eu d'effet significatif sur le taux de greffage : 11,5 % par rapport à 12,5 % sans MTAS, par contre elle a eu un effet sur la formation d'homopolymère qui était en quantité moindre et plus facilement éliminable.

## 6° série d'essais

Deux essais de greffage sont effectués en parallèle sur polyamide, à l'aide d'une émulsion de styrène à 10 % en concentration et contenant 1 % d'émulsionnant SOPROPHOR 3D33. Dans l'une, on ajoute en plus 0,5 % d'acétate d'allyle.

Chaque échantillon est préalablement ozoné selon les conditions décrites dans l'exemple 1, puis immergé dans l'émulsion pendant 1 H à 85°C, le rapport de bain étant de 1/5.

Le gain de poids obtenu après séchage de l'échantillon greffé en l'absence d'acétate d'allyle est de 33,3 %, il est de 13,8 % après extraction dans un mélange acétone-benzène 50/50. Ce dernier chiffre représente le taux de greffage et la diférence entre 33,3 et 13,8 % la quantité d'homopolymère formée sur le tissu durant la réaction.

La même opération effectuée en présence de 0,5 % d'acétate d'allyle donne respectivement comme valeur 10,2 % comme gain de poids et 9,8 % en taux de greffage, le taux extractible total étant de 0,4 %. Le Tg est légèrement inférieur en présence d'acétate d'allyle mais le matériau greffé est exempt d'homopolymère.

## 7° série d'essais

On a greffé des fibres cellulosiques se présentant sous forme de papier de dimension 20 x 20 cm avec le monomère dénommé AMPS (-2-acrylamide 2-méthyl propène sulfonique) de formule :

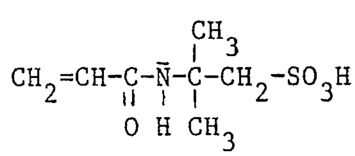

qui se présente initialement sous forme d'une poudre blanche soluble dans l'eau.

Les solutions de monomère sont à 30 % de concentration.

Les échantillons de papier sont préimprégnés de la solution d'AMPS, puis foulardés (taux d'essorage de 60 %) et placés dans un sac qui est scellé sous vide. Ils sont alors activés par passage sous faisceaux d'électrons à la dose de 1 Mrad.

Immédiatement après irradiation, les échantillons sont récupérés; rincés à l'eau distillée plusieurs fois (5 cycles de rinçage-foulardage), séchés puis pesés.

Avec les solutions d'imprégnation exempt de [méthyl-2 propen-2-yl]-4 benzène sulfonate de sodium (MPBS), le Tg obtenu de 3 %. A noter qu'au bout de 2 heures à température ambiante, la solution qui a servi à l'imprégnation s'est autopolymérisée. Elle est devenue inutilisable (Tg nul lors d'un nouvel essais 24 heures après).

La solution d'AMPS contenant 0,2 % de [méthyl-2 propen-2-yl]-4-benzène sulfonate de sodium (MPBS) conduit dans les mêmes conditions à un Tg de 11,7 % lors d'un premier essai.

L'excès de solution est resté limpide. Réutilisé après 24 heures de stockage, le Tg obtenu à partir de la même solution est de 11,1%, c'est-à-dire pratiquement identique au précédent.

## Revendications

1. Procédé de greffage du type dans lequel un matériau polymérique activé est mis en contact avec un milieu de greffage consistant en une solution ou une émulsion contenant au moins un monomère et un agent inhibiteur d'homopolymérisation comprenant une fonction compatibilisante vis-à-vis du milieu de greffage caractérisé en ce que ledit agent inhibiteur est un composé comportant une fonction insaturée du type allylique et intervenant dans une proportion de 0,1 à 2% en poids par rapport au milieu de greffage.

2. Procédé de greffage selon la revendication 1 caractérisé en ce que la fonction insaturée du type allylique est le groupement méthyl-2 propène.

3. Procédé de greffage selon la revendication 2 caractérisé en ce que l'agent inhibiteur est le méthyl-2 propène-2 sulfonate de sodium.

4. Procédé de greffage selon la revendication 2 caractérisé en ce que l'agent inhibiteur est le (méthyl-2 propène-2-yl) - 4 benzène sulfonate de sodium.

5. Procédé de greffage selon la revendication 1 caractérisé en ce que l'agent inhibiteur est l'acétate d'allyle.

6. Procédé de greffage selon la revendication 1 caractérisé en ce que l'agent inhibiteur est le tertiobutyl-4 benzène allyl éther.

7. Procédé de greffage selon la revendication 3 caractérisé en ce que le milieu de greffage contient comme monomère l'acrylamide ou l'acide acrylique.

## Claims

1. A grafting process, of the kind in which an activated polymeric material is placed in contact with a grafting medium comprising a solution or emulsion containing at least one monomer and one homopolymerisation inhibitor comprising a group giving compatibility with the grafting medium, characterised in that the inhibitor is a compound containing an unsaturated allyl-type group and present in a proportion of 0.1 to 2% by weight of the grafting medium.

2. A grafting process according to claim 1, characterised in that the allyl-type unsaturated group is the 2-methyl propene grouping.

3. A grafting process according to claim 2, characterised in that the inhibitor is sodium 2-methyl 2-propene sulphonate.

4. A grafting process according to claim 2, characterised in that the inhibitor is sodium 4-(2-methyl 2-propenyl) benzene sulphonate.

5. A grafting process according to claim 1, characterised in that the inhibitor is allyl acetate.

6. A grafting process according to claim 1, characterised in that the inhibitor is 4-tertiobutyl benzene allyl ether.

7. A grafting process, according to claim 3, characterised in that the monomer in the grafting medium is acrylamide or acrylic acid.

## Ansprüche

1. Verfahren zur Pfropfung, bei dem ein aktiviertes Polymermaterial mit einem Pfropfungsmedium in Kontakt gebracht wird, das aus einer Lösung oder einer Emulsion besteht, die mindestens ein Monomer sowie einen Inhibitor der Homopolymerisation enthält, der eine gegenüber dem Pfropfungsmedium kompatibilisierende Funktion aufweist,

   **dadurch gekennzeichnet**, daß

der Inhibitor eine Verbindung mit einer ungesättigten Funktion vom Allyltyp ist und in einem Mengenanteil von 0,1 bis 2 Gew.-%, bezogen auf das Pfropfungsmedium, eingesetzt wird.

2. Verfahren nach Anspruch 1, dadurch gekennzeichnet, daß die ungesättigte Funktion vom Allyltyp die Gruppe 2-Methylpropen ist.

3. Verfahren nach Anspruch 2, dadurch gekennzeichnet, daß der Inhibitor Natrium-2-methyl-2-propensulfonat ist.

4. Verfahren nach Anspruch 2, dadurch gekennzeichnet, daß der Inhibitor Natrium-4-(2-methylpropen-2-yl)-benzolsulfonat ist.

5. Verfahren nach Anspruch 1, dadurch gekennzeichnet, daß der Inhibitor Allylacetat ist.

6. Verfahren nach Anspruch 1, dadurch gekennzeichnet, daß der Inhibitor 4-t-Butylphenylallylether ist.

7. Verfahren nach Anspruch 3, dadurch gekennzeichnet, daß das Pfropfungsmedium als Monomere Acrylamid oder Acrylsäure enthält.